# EUROPEAN PATENT APPLICATION

(11) **EP 4 622 135 A1**
(43) Date of publication of application: **24.09.2025**
(21) Application number: 23910377.3
(22) Date of filing: 22.12.2023
(51) Int. Cl.: H04B 10/40

(54) **COHERENT OPTICAL COMMUNICATION DEVICE, COHERENT OPTICAL COMMUNICATION METHOD, AND COHERENT OPTICAL COMMUNICATION SYSTEM**

(30) Priority: 30.12.2022 CN 202211740913
(71) Applicant: Huawei Technologies Co., Ltd., Shenzhen, Guangdong 518129 (CN)
(72) Inventor: CHEN, Xi, Shenzhen, Guangdong 518129 (CN); GUI, Tao, Shenzhen, Guangdong 518129 (CN); LI, Liangchuan, Shenzhen, Guangdong 518129 (CN)
(74) Representative: MERH-IP Matias Erny Reichl Hoffmann Patentanwälte PartG mbB
(86) International application number: PCT/CN2023/140883
(87) International publication number: WO 2024/140451

(57) **Abstract**

This application provides a coherent optical communication device, used in the field of coherent optical communication. The coherent optical communication device includes an optical transceiver module and a processor. The optical transceiver module is configured to: generate a first laser signal by using a first laser, and transmit the first laser signal to another coherent optical communication device. The first laser signal carries first information. The optical transceiver module is further configured to receive a second laser signal from the another coherent optical communication device. The second laser signal is obtained by using a second laser. The processor is configured to obtain second information based on the second laser signal. A magnitude relationship between the first information and the second information is used for determining to adjust a frequency of one laser in two lasers and determining not to adjust a frequency of the other laser in the two lasers. In this application, a frequency offset between the two coherent optical communication devices may be controlled by determining a master-slave relationship. Therefore, a wavelength locker does not need to be introduced for the coherent optical communication device, thereby reducing costs of the coherent optical communication device.

## Description

This application claims priority to Chinese Patent Application No. 202211740913.8, filed with the China National Intellectual Property Administration on December 30, 2022 and entitled "COHERENT OPTICAL COMMUNICATION DEVICE, COHERENT OPTICAL COMMUNICATION METHOD, AND COHERENT OPTICAL COMMUNICATION SYSTEM", which is incorporated herein by reference in its entirety.

### TECHNICAL FIELD

This application relates to the communication field, and in particular, to a coherent optical communication device, a coherent optical communication method, and a coherent optical communication system.

### BACKGROUND

A coherent optical communication device needs to demodulate, by using a local oscillator laser signal, a service laser signal transmitted by another coherent optical communication device. When a frequency offset between the local oscillator laser signal and the service laser signal is excessively large, transmission of a service signal cannot be normally performed between the coherent optical communication devices. To control the frequency offset between the two signals, the two coherent optical communication devices may be respectively provided with wavelength lockers. The wavelength locker can control frequencies of the local oscillator laser signal and the service laser signal to be within a range, to control the frequency offset between the two signals. However, complex calibration needs to be performed on the wavelength locker and a related control apparatus. In addition, costs of the wavelength locker and the related control apparatus are high, resulting in high costs of the coherent optical communication device.

### SUMMARY

This application provides a coherent optical communication device, a coherent optical communication method, and a coherent optical communication system. A master-slave relationship is determined, to enable a slave device in the master-slave relationship to adjust a frequency of a laser. In this way, a frequency offset between two coherent optical communication devices is controlled. Therefore, a wavelength locker does not need to be introduced for the coherent optical communication device, thereby reducing costs of the coherent optical communication device.

A first aspect of this application provides a coherent optical communication device. The coherent optical communication device includes an optical transceiver module and a processor. The optical transceiver module is configured to: generate a first laser signal by using a first laser, and transmit the first laser signal to another coherent optical communication device. The first laser signal carries first information. The optical transceiver module is further configured to receive a second laser signal from the another coherent optical communication device. The second laser signal is obtained by using a second laser. The optical transceiver module is further configured to convert the second laser signal into a second electrical signal. The processor is configured to obtain second information based on the second electrical signal. A magnitude relationship between the first information and the second information is used for determining to adjust a frequency of one laser in two lasers. The magnitude relationship between the first information and the second information is further used for determining not to adjust a frequency of the other laser in the two lasers. The two lasers include the first laser and the second laser.

In this application, both the two coherent optical communication devices may obtain the first information and the second information, and determine a master-slave relationship based on the magnitude relationship between the first information and the second information. A master device in the master-slave relationship does not adjust a frequency of the laser. A slave device in the master-slave relationship adjusts the frequency of the laser. By adjusting the frequency of the laser of the slave device, a frequency offset between the two coherent optical communication devices may be controlled. In addition, a wavelength locker does not need to be introduced for the coherent optical communication device. Therefore, in this application, costs of the coherent optical communication device can be reduced.

In an optional manner of the first aspect, the magnitude relationship between the first information and the second information is used by the coherent optical communication device to determine not to adjust a frequency of the first laser. The magnitude relationship between the first information and the second information is used by the another coherent optical communication device to determine to adjust a frequency of the second laser. In this case, the coherent optical communication device is the master device. The another coherent optical communication device is the slave device.

In an optional manner of the first aspect, the magnitude relationship between the first information and the second information is used by the coherent optical communication device to determine to adjust the frequency of the first laser. The magnitude relationship between the first information and the second information is used by the another coherent optical communication device to determine not to adjust the frequency of the second laser. In this case, the coherent optical communication device is the slave device. The another coherent optical communication device is the master device.

In an optional manner of the first aspect, the second information is a duty cycle or frequency information of the second electrical signal. When the frequency offset between the two coherent optical communication devices is excessively large, the coherent optical communication device may fail to normally obtain service information transmitted by the another coherent optical communication device. Therefore, the duty cycle or the frequency information of the second electrical signal is used as the second information, so that reliability of obtaining the second information by the coherent optical communication device can be improved.

In an optional manner of the first aspect, the frequency information of the second electrical signal is a frequency value of the second electrical signal, a quantity of frequency values of the second electrical signal, or a frequency range of the second electrical signal.

In an optional manner of the first aspect, the optical transceiver module is configured to: receive a plurality of second laser signals from the another coherent optical communication device, and convert the plurality of second laser signals into a plurality of second electrical signals. The optical transceiver module is further configured to superimpose the plurality of second electrical signals to obtain a target electrical signal. The processor is configured to obtain the second information based on the target electrical signal. When the frequency offset between the two coherent optical communication devices is excessively large, power of the second electrical signal may be low, resulting in low accuracy of the obtained second information. In this application, the plurality of second electrical signals are superimposed, so that the accuracy of the obtained second information can be improved.

In an optional manner of the first aspect, the optical transceiver module is further configured to: split the second laser signal into a first optical sub-signal and a second optical sub-signal through power splitting, and perform coherent frequency mixing on the first optical sub-signal and a local oscillator laser signal. The optical transceiver module is configured to convert the second optical sub-signal into the second electrical signal. When the frequency offset between the two coherent optical communication devices is excessively large, the coherent optical communication device may fail to obtain the second information in a coherent frequency mixing manner. In this application, the second information is obtained by using the second optical sub-signal, so that impact of the local oscillator laser signal can be reduced, and the reliability of obtaining the second information can be improved.

In an optional manner of the first aspect, the optical transceiver module is configured to generate a target carrier signal by using the first laser. The optical transceiver module is configured to perform power splitting on the target carrier signal to obtain a first carrier signal and the local oscillator laser signal. The first carrier signal is used for obtaining the first laser signal. The first laser signal and the local oscillator laser signal are obtained by using one laser, so that the costs of the coherent optical communication device can be reduced.

In an optional manner of the first aspect, the optical transceiver module is further configured to: generate a third laser signal by using the first laser, and transmit the third laser signal to the another coherent optical communication device. The third laser signal carries third information. The optical transceiver module is further configured to receive a fourth laser signal from the another coherent optical communication device. The fourth laser signal carries fourth information. When a difference between the third information and the fourth information is less than a first threshold, the optical transceiver module is configured to generate the first laser signal by using the first laser. When the difference between the third information and the fourth information is excessively small, an error may occur in determining the master-slave relationship. The error in determining the master-slave relationship causes a case in which both the coherent optical communication devices adjust or neither of the two coherent optical communication devices adjusts the frequency of the laser. Consequently, efficiency of controlling the frequency offset is reduced. Therefore, the efficiency of controlling the frequency offset can be improved in this application.

In an optional manner of the first aspect, the optical transceiver module is further configured to transmit a third laser signal to the another coherent optical communication device in a first time period. A frequency of the third laser signal changes with time in the first time period. The optical transceiver module is further configured to transmit the third laser signal to the another coherent optical communication device in a second time period. The frequency of the third laser signal does not change with time in the second time period. The first time period and the second time period are alternated. The optical transceiver module is further configured to receive a fourth laser signal from the another coherent optical communication device. The processor is further configured to obtain a first frequency offset between the third laser signal and the fourth laser signal. When the first frequency offset is less than a second threshold, the optical transceiver module is configured to generate the first laser signal by using the first laser. A frequency of the first laser signal is the same as the frequency of the third laser signal. When the frequency offset between the two coherent optical communication devices is excessively large, the coherent optical communication device may fail to normally receive the second information. The frequency offset between the two coherent optical communication devices is reduced, so that the reliability of receiving the second information by the coherent optical communication devices can be improved.

A second aspect of this application provides a coherent optical communication method. The coherent optical communication method includes the following steps: A coherent optical communication device generates a first laser signal by using a first laser. The coherent optical communication device transmits the first laser signal to another coherent optical communication device. The first laser signal carries first information. The another coherent optical communication device generates a second laser signal by using a second laser. The another coherent optical communication device transmits the second laser signal to the coherent optical communication device. The second laser signal carries second information. The coherent optical communication device receives the second laser signal from the another coherent optical communication device, and converts the second laser signal into a second electrical signal. The coherent optical communication device obtains the second information based on the second electrical signal. The coherent optical communication device determines to adjust a frequency of the first laser based on a magnitude relationship between the first information and the second information. The another coherent optical communication device receives the first laser signal from the coherent optical communication device, and converts the first laser signal into a first electrical signal. The another coherent optical communication device obtains the first information based on the first electrical signal. The another coherent optical communication device determines not to adjust a frequency of the second laser based on the magnitude relationship between the first information and the second information.

In an optional manner of the second aspect, the coherent optical communication device receives a plurality of second laser signals from the another coherent optical communication device. The coherent optical communication device converts the plurality of second laser signals into a plurality of second electrical signals. The coherent optical communication method further includes the following steps: The coherent optical communication device superimposes the plurality of second electrical signals to obtain a target electrical signal. The coherent optical communication device obtains the second information based on the target electrical signal.

In an optional manner of the second aspect, the coherent optical communication method further includes the following steps: The coherent optical communication device splits the second laser signal into a first optical sub-signal and a second optical sub-signal through power splitting. The coherent optical communication device performs coherent frequency mixing on the first optical sub-signal and a local oscillator laser signal. The coherent optical communication device converts the second optical sub-signal into the second electrical signal.

In an optional manner of the second aspect, the coherent optical communication device generates a target carrier signal by using the first laser. The coherent optical communication device performs power splitting on the target carrier signal to obtain a first carrier signal and the local oscillator laser signal. The first carrier signal is used for obtaining the first laser signal.

In an optional manner of the second aspect, the coherent optical communication method further includes the following steps: The coherent optical communication device generates a third laser signal by using the first laser, and transmits the third laser signal to the another coherent optical communication device. The third laser signal carries third information. The coherent optical communication device receives a fourth laser signal from the another coherent optical communication device. The fourth laser signal carries fourth information. When a difference between the third information and the fourth information is less than a first threshold, the coherent optical communication device generates the first laser signal by using the first laser.

In an optional manner of the second aspect, the coherent optical communication method further includes the following steps: The coherent optical communication device transmits a third laser signal to the another coherent optical communication device in a first time period. A frequency of the third laser signal changes with time in the first time period. The coherent optical communication device transmits the third laser signal to the another coherent optical communication device in a second time period. The frequency of the third laser signal does not change with time in the second time period. The first time period and the second time period are alternated. The coherent optical communication device receives a fourth laser signal from the another coherent optical communication device. The optical transceiver module obtains a first frequency offset between the third laser signal and the fourth laser signal. When the first frequency offset is less than a second threshold, the coherent optical communication device generates the first laser signal by using the first laser. A frequency of the first laser signal is the same as the frequency of the third laser signal.

In an optional manner of the second aspect, the second information is a duty cycle or frequency information of the second electrical signal.

A third aspect of this application provides a coherent optical communication system. The coherent optical communication system includes a coherent optical communication device and another coherent optical communication device. The coherent optical communication device is configured to: generate a first laser signal by using a first laser, and transmit the first laser signal to the another coherent optical communication device. The another coherent optical communication device is configured to: generate a second laser signal by using a second laser, and transmit the second laser signal to the coherent optical communication device. The coherent optical communication device is configured to receive the second laser signal from the another coherent optical communication device. The coherent optical communication device is configured to: convert the second laser signal into a second electrical signal, and obtain second information based on the second electrical signal. The coherent optical communication device is configured to determine to adjust a frequency of the first laser based on a magnitude relationship between first information and the second information. The another coherent optical communication device is configured to receive the first laser signal from the coherent optical communication device. The another coherent optical communication device is configured to: convert the first laser signal into a first electrical signal, and obtain the first information based on the first electrical signal. The another coherent optical communication device is configured to determine not to adjust a frequency of the second laser based on the magnitude relationship between the first information and the second information.

In an optional manner of the third aspect, the coherent optical communication device is configured to: receive a plurality of second laser signals from the another coherent optical communication device, and convert the plurality of second laser signals into a plurality of second electrical signals. The coherent optical communication device is further configured to superimpose the plurality of second electrical signals to obtain a target electrical signal. The coherent optical communication device is configured to obtain the second information based on the target electrical signal.

In an optional manner of the third aspect, the coherent optical communication device is further configured to: split the second laser signal into a first optical sub-signal and a second optical sub-signal through power splitting, and perform coherent frequency mixing on the first optical sub-signal and a local oscillator laser signal. The coherent optical communication device is configured to convert the second optical sub-signal into the second electrical signal.

In an optional manner of the third aspect, the coherent optical communication device is configured to: generate a target carrier signal by using the first laser, and perform power splitting on the target carrier signal to obtain a first carrier signal and the local oscillator laser signal. The first carrier signal is used for obtaining the first laser signal.

In an optional manner of the third aspect, the coherent optical communication device is further configured to: generate a third laser signal by using the first laser, and transmit the third laser signal to the another coherent optical communication device. The third laser signal carries third information. The coherent optical communication device is further configured to receive a fourth laser signal from the another coherent optical communication device. The fourth laser signal carries fourth information. When a difference between the third information and the fourth information is less than a first threshold, the coherent optical communication device is configured to generate the first laser signal by using the first laser.

In an optional manner of the third aspect, the coherent optical communication device is further configured to transmit a third laser signal to the another coherent optical communication device in a first time period. A frequency of the third laser signal changes with time in the first time period. The coherent optical communication device is further configured to transmit the third laser signal to the another coherent optical communication device in a second time period. The frequency of the third laser signal does not change with time in the second time period. The first time period and the second time period are alternated. The coherent optical communication device is further configured to receive a fourth laser signal from the another coherent optical communication device. The coherent optical communication device is further configured to obtain a first frequency offset between the third laser signal and the fourth laser signal. When the first frequency offset is less than a second threshold, the coherent optical communication device is configured to generate the first laser signal by using the first laser. A frequency of the first laser signal is the same as the frequency of the third laser signal.

In an optional manner of the third aspect, the second information is a duty cycle or frequency information of the second electrical signal.

A fourth aspect of this application provides a coherent optical communication device. The coherent optical communication device includes an optical transceiver module and a processor. The optical transceiver module is configured to transmit a first laser signal to another coherent optical communication device in a first time period. A frequency of the first laser signal changes with time in the first time period. The optical transceiver module is configured to transmit the first laser signal to the another coherent optical communication device in a second time period. The frequency of the first laser signal does not change with time in the second time period. The first time period and the second time period are alternated. The optical transceiver module is further configured to receive a second laser signal from the another coherent optical communication device. The processor is configured to obtain a first frequency offset between the first laser signal and the second laser signal. When the first frequency offset is less than a third threshold, the optical transceiver module is further configured to transmit a service laser signal to the another coherent optical communication device.

In an optional manner of the fourth aspect, when the first frequency offset is greater than or equal to the third threshold and is less than a fourth threshold, the processor is further configured to actively adjust a frequency of a first laser based on the first frequency offset. In actual application, the processor may continuously obtain the first frequency offset until the first frequency offset is less than the third threshold. However, to improve efficiency of controlling the frequency offset, the processor may actively adjust the frequency of the first laser based on the first frequency offset. Therefore, the efficiency of controlling the frequency offset can be improved in this application.

In an optional manner of the fourth aspect, durations of a plurality of consecutive first time periods are random numbers. When the durations of the plurality of first time periods are the same, the first frequency offset may be greater than or equal to the third threshold for long time. The duration of the first time period is set to the random number, so that a probability that the first frequency offset is greater than or equal to the third threshold for the long time can be reduced. Therefore, the efficiency of controlling the frequency offset can be improved in this application.

In an optional manner of the fourth aspect, durations of a plurality of consecutive second time periods are random numbers. When the durations of the plurality of second time periods are the same, the first frequency offset may be greater than or equal to the third threshold for long time. The duration of the second time period is set to the random number, so that the probability that the first frequency offset is greater than or equal to the third threshold for the long time can be reduced. Therefore, the efficiency of controlling the frequency offset can be improved in this application.

In an optional manner of the fourth aspect, the duration of the first time period is less than 10 milliseconds. In actual application, the duration of the first time period affects the efficiency of controlling the frequency offset. The duration of the first duration period is properly controlled, so that the efficiency of controlling the frequency offset can be improved.

In an optional manner of the fourth aspect, the duration of the second time period is greater than 1 second. In actual application, the duration of the first time period affects the efficiency of controlling the frequency offset. The duration of the second duration period is properly controlled, so that the efficiency of controlling the frequency offset can be improved.

A fifth aspect of this application provides a coherent optical communication method. The coherent optical communication method includes the following steps: A coherent optical communication device transmits a first laser signal to another coherent optical communication device in a first time period. A frequency of the first laser signal changes with time in the first time period. The coherent optical communication device transmits the first laser signal to the another coherent optical communication device in a second time period. The frequency of the first laser signal does not change with time in the second time period. The first time period and the second time period are alternated. The coherent optical communication device receives a second laser signal from the another coherent optical communication device. The coherent optical communication device obtains a first frequency offset between the first laser signal and the second laser signal. When the first frequency offset is less than a third threshold, the coherent optical communication device transmits a service laser signal to the another coherent optical communication device by using a first laser.

In an optional manner of the fifth aspect, the coherent optical communication method further includes the following step: When the first frequency offset is greater than or equal to the third threshold and is less than a fourth threshold, the coherent optical communication device actively adjusts a frequency of the first laser based on the first frequency offset.

A sixth aspect of this application provides a coherent optical communication system. The coherent optical communication system includes a coherent optical communication device and another coherent optical communication device. The coherent optical communication device is configured to transmit a first laser signal to the another coherent optical communication device in a first time period. A frequency of the first laser signal changes with time in the first time period. The coherent optical communication device is configured to transmit the first laser signal to the another coherent optical communication device in a second time period. The frequency of the first laser signal does not change with time in the second time period. The first time period and the second time period are alternated. The another coherent optical communication device is configured to transmit a second laser signal to the coherent optical communication device in a third time period. A frequency of the second laser signal changes with time in the third time period. The another coherent optical communication device transmits the second laser signal to the coherent optical communication device in a fourth time period. The frequency of the second laser signal does not change with time in the fourth time period. The third time period and the fourth time period are alternated. The coherent optical communication device is further configured to: obtain a first frequency offset between the first laser signal and the second laser signal, and when the first frequency offset is less than a third threshold, transmit a service laser signal to the another coherent optical communication device by using a first laser.

In an optional manner of the sixth aspect, when the first frequency offset is greater than or equal to the third threshold and is less than a fourth threshold, the coherent optical communication device is further configured to actively adjust a frequency of the first laser based on the first frequency offset.

It should be understood that the descriptions of the coherent optical communication method in the fifth aspect and the descriptions of the coherent optical communication system in the sixth aspect are similar to the descriptions of the coherent optical communication device in the fourth aspect. Therefore, for the descriptions of the coherent optical communication method in the fifth aspect and the descriptions of the coherent optical communication system in the sixth aspect, refer to the descriptions of the coherent optical communication device in the fourth aspect. For example, durations of a plurality of consecutive first time periods are random numbers. The duration of the first time period is less than 10 milliseconds.

### BRIEF DESCRIPTION OF DRAWINGS

FIG. 1 is a first diagram of a structure of a coherent optical communication device according to an embodiment of this application;
FIG. 2 is a first diagram of structures of a second electrical signal and a first electrical signal according to an embodiment of this application;
FIG. 3 is a second diagram of structures of a second electrical signal and a first electrical signal according to an embodiment of this application;
FIG. 4 is a third diagram of structures of a second electrical signal and a first electrical signal according to an embodiment of this application;
FIG. 5 is a fourth diagram of structures of a second electrical signal and a first electrical signal according to an embodiment of this application;
FIG. 6 is a fifth diagram of structures of a second electrical signal and a first electrical signal according to an embodiment of this application;
FIG. 7 is a first diagram of a structure of an optical transceiver module according to an embodiment of this application;
FIG. 8 is a second diagram of a structure of an optical transceiver module according to an embodiment of this application;
FIG. 9 is a first diagram of a structure of a receiver according to an embodiment of this application;
FIG. 10 is a second diagram of a structure of a receiver according to an embodiment of this application;
FIG. 11 is a second diagram of a structure of a coherent optical communication device according to an embodiment of this application;
FIG. 12 is a first diagram of a curve of a first laser signal according to an embodiment of this application;
FIG. 13 is a second diagram of a curve of a first laser signal according to an embodiment of this application;
FIG. 14 is a diagram of curves of a first laser signal and a second laser signal according to an embodiment of this application;
FIG. 15 is a first schematic flowchart of a coherent optical communication method according to an embodiment of this application;
FIG. 16 is a second schematic flowchart of a coherent optical communication method according to an embodiment of this application; and
FIG. 17 is a diagram of a structure of a coherent optical communication system according to an embodiment of this application.

### DESCRIPTION OF EMBODIMENTS

This application provides a coherent optical communication device, a coherent optical communication method, and a coherent optical communication system. A master-slave relationship is determined, to enable a slave device in the master-slave relationship to adjust a frequency of a laser. In this way, a frequency offset between two coherent optical communication devices is controlled. A wavelength locker does not need to be introduced, thereby reducing costs of the coherent optical communication device.

It should be understood that "first", "second", "target", and the like used in this application are merely for differentiation and description, but cannot be understood as an indication or implication of relative importance or an indication or implication of a sequence. In addition, for brevity and clarity, reference numbers and/or letters are repeated in a plurality of accompanying drawings of this application. Repetition is not indicative of a strict limiting relationship between various embodiments and/or configurations.

The coherent optical communication device in this application is used in the field of coherent optical communication. In the field of the coherent optical communication, the coherent optical communication device needs to demodulate, by using a local oscillator laser signal, a service laser signal transmitted by another coherent optical communication device. To control a frequency offset between the local oscillator laser signal and the service laser signal, the two coherent optical communication devices may be respectively provided with wavelength lockers. However, costs of the wavelength locker are high, resulting in high costs of the coherent optical communication device.

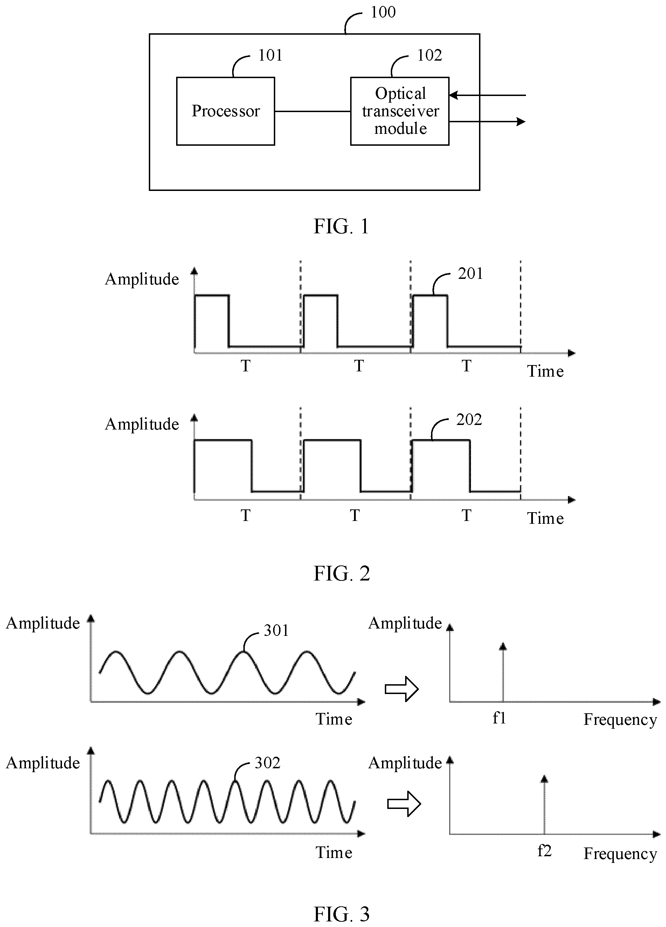

Therefore, this application provides a coherent optical communication device. FIG. 1 is a first diagram of a structure of a coherent optical communication device according to an embodiment of this application. As shown in FIG. 1, the coherent optical communication device 100 includes a processor 101 and an optical transceiver module 102. The following describes functions of each module.

The optical transceiver module 102 is connected to another coherent optical communication device through an optical fiber. The optical transceiver module 102 is configured to: generate a first laser signal by using a first laser, and transmit the first laser signal to the another coherent optical communication device. For example, the optical transceiver module 102 includes the first laser and a transmitter. The first laser is configured to generate a carrier signal. The transmitter is configured to: receive a first electrical signal from the processor 101, and modulate the carrier signal based on the first electrical signal, to obtain the first laser signal. The first laser signal carries first information. The first information may be generated by the processor 101 by using a random algorithm.

The optical transceiver module 102 is further configured to receive a second laser signal from the another coherent optical communication device. The second laser signal is obtained by using a second laser of the another coherent optical communication device. The optical transceiver module 102 is further configured to convert the second laser signal into a second electrical signal. Specifically, the optical transceiver module 102 further includes a receiver. The optical transceiver module 102 converts the second laser signal into the second electrical signal by using the receiver.

The processor 101 may be a digital signal processing technology (digital signal processing, DSP) chip, a field programmable gate array (field programmable gate array, FPGA) chip, a central processing unit (central processing unit, CPU), a network processor (network processor, NP), or a combination of the CPU and the NP. The processor 101 may alternatively be a graphics processing unit (graphics processing unit, GPU). The processor 101 may further include a hardware chip or another general-purpose processor. The foregoing hardware chip may be an application-specific integrated circuit (application-specific integrated circuit, ASIC), a programmable logic device (programmable logic device, PLD), or a combination thereof. The processor 101 is configured to obtain second information based on the second electrical signal.

A magnitude relationship between the first information and the second information is used for determining a master-slave relationship between the two coherent optical communication devices. For example, a target coherent optical communication device is any coherent optical communication device of the two coherent optical communication devices. The two coherent optical communication devices include the coherent optical communication device 100 and the another coherent optical communication device. The target coherent optical communication device determines a magnitude relationship between information output at a local end and information output at a peer end. When the information output at the local end is larger than the information output at the peer end, the local end is determined as a master device. When the information output at the local end is smaller than the information output at the peer end, the local end is determined as a slave device. Therefore, the two coherent optical communication devices include one master device and one slave device. The master device in the master-slave relationship does not adjust a frequency of the laser. The slave device in the master-slave relationship adjusts the frequency of the laser. Therefore, the magnitude relationship between the first information and the second information is used for determining to adjust a frequency of one laser in two lasers. The magnitude relationship between the first information and the second information is further used for determining not to adjust a frequency of the other laser in the two lasers. The two lasers include the first laser and the second laser.

In a subsequent example, an example in which the coherent optical communication device 100 is the slave device and the another coherent optical communication device is the master device is used for description. In this case, the processor 101 is configured to determine to adjust a frequency of the first laser based on the magnitude relationship between the first information and the second information. The another coherent optical communication device is configured to determine not to adjust a frequency of the second laser based on the magnitude relationship between the first information and the second information.

In this embodiment of this application, a manner in which the processor 101 adjusts the frequency of the first laser is not limited. For example, the processor 101 adjusts the frequency of the first laser by adjusting an injection current or a temperature of the first laser. A direction of adjusting the frequency of the first laser is also not limited in this embodiment of this application. For example, the processor 101 gradually increases the frequency of the first laser from a lower limit frequency of the first laser. For another example, the processor 101 periodically adjusts the frequency of the first laser, so that the frequency of the first laser fluctuates based on a sine curve.

In this embodiment of this application, the another coherent optical communication device determines not to adjust the frequency of the second laser. In other words, the frequency of the second laser does not change with time in a target time period. The coherent optical communication device 100 determines to adjust the frequency of the first laser. In other words, the frequency of the first laser changes with time in the target time period. The target time period is a time period after the coherent optical communication device 100 or the another coherent optical communication device determines the master-slave relationship. Therefore, a frequency offset between the coherent optical communication device 100 and the another coherent optical communication device changes with time in the target time period. The coherent optical communication device 100 and/or the another coherent optical communication device may continuously measure the frequency offset between the coherent optical communication device 100 and the another coherent optical communication device. When the frequency offset between the coherent optical communication device 100 and the another coherent optical communication device is less than a third threshold, the coherent optical communication device 100 may stop adjusting the frequency of the first laser. The coherent optical communication device 100 and the another coherent optical communication device may begin to perform transmission of a service laser signal by using the two lasers. The service laser signal may be used for carrying service information.

It should be understood that, in this embodiment of this application, adjusting, by the another coherent optical communication device, the frequency of the second laser in time outside the target time period is not limited. Therefore, a frequency of the second laser in the target time period and a frequency of the second laser outside the target time period may be different. Similarly, in this embodiment of this application, stopping, by the coherent optical communication device 100, adjusting the frequency of the first laser in time outside the target time period is also not limited. Therefore, the frequency of the first laser in time outside the target time period may not change with time.

It should be understood that, in this embodiment of this application, impact of some random factors on the frequency of the laser is ignored. For example, in actual application, with a change of an ambient temperature of the second laser, even if the another coherent optical communication device determines not to adjust the frequency of the second laser, a frequency of the second laser signal may slightly change with time in the target time period.

It should be understood that a structure of the another coherent optical communication device is similar to a structure of the coherent optical communication device 100. Therefore, for the descriptions of the another coherent optical communication device, refer to the descriptions of the coherent optical communication device 100. For example, the another coherent optical communication device also includes a processor and an optical transceiver module. The optical transceiver module includes the second laser, a transmitter, and a receiver. The second laser is configured to generate a carrier signal. The transmitter is configured to: receive the second electrical signal from the processor, and modulate the carrier signal based on the second electrical signal, to obtain the second laser signal. The second laser signal carries the second information. The optical transceiver module is configured to transmit the second laser signal to the coherent optical communication device 100. The receiver is configured to: receive the first laser signal from the coherent optical communication device 100, and convert the first laser signal into the first electrical signal. The processor is configured to obtain the first information by using the first electrical signal. The processor is configured to determine the master-slave relationship based on the magnitude relationship between the first information and the second information.

In this embodiment of this application, the coherent optical communication device 100 and the another coherent optical communication device may determine the master-slave relationship based on the magnitude relationship between the first information and the second information, and determine, based on the master-slave relationship, whether to adjust the frequency of the laser. Therefore, in this embodiment of this application, the frequency offset between the two coherent optical communication devices may be controlled. In addition, a wavelength locker does not need to be introduced for the coherent optical communication device 100 and the another coherent optical communication device, thereby reducing costs of the coherent optical communication device.

In another embodiment, the coherent optical communication device 100 may further include a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory is connected to the processor 101. The memory may be configured to store the first information. The memory may also be configured to store the second information obtained from the another coherent optical communication device.

In another embodiment, when the frequency offset between the two coherent optical communication devices is excessively large, the coherent optical communication device 100 may fail to normally obtain the service information transmitted by the another coherent optical communication device. Therefore, for the coherent optical communication device 100, a duty cycle or frequency information of the second electrical signal may be used as the second information, and a duty cycle or frequency information of the first electrical signal may be used as the first information. The frequency information of the electrical signal may be a frequency value of the electrical signal, a quantity of frequency values of the electrical signal, a frequency range of the electrical signal, a lower limit frequency of the electrical signal, a center frequency of the electrical signal, or an upper limit frequency of the electrical signal. The following separately describes different second information and different first information.

FIG. 2 is a first diagram of structures of a second electrical signal and a first electrical signal according to an embodiment of this application. As shown in FIG. 2, the first electrical signal 201 and the second electrical signal 202 are square wave signals. A duty cycle of the first electrical signal 201 and a duty cycle of the second electrical signal 202 are different. For example, the duty cycle of the first electrical signal 201 is 30%. The duty cycle of the second electrical signal 202 is 50%. First information is the duty cycle of the first electrical signal 201. Second information is the duty cycle of the second electrical signal 202. A processor 101 determines a master-slave relationship based on a magnitude relationship between the two duty cycles. For example, the processor 101 is configured to determine, based on that the first information is smaller than the second information, that a coherent optical communication device 100 is a slave device. In addition, another coherent optical communication device is configured to determine, based on that the second information is larger than the first information, that the another coherent optical communication device is a master device.

FIG. 3 is a second diagram of structures of a second electrical signal and a first electrical signal according to an embodiment of this application. As shown in FIG. 3, the first electrical signal 301 and the second electrical signal 302 are sine wave signals. A frequency value of the first electrical signal 301 and a frequency value of the second electrical signal 302 are different. In FIG. 3, the frequency value of the first electrical signal 301 is f1. The frequency value of the second electrical signal 302 is f2. First information is the frequency value of the first electrical signal 301. Second information is the frequency value of the second electrical signal 302. A processor 101 determines a master-slave relationship based on a magnitude relationship between the two frequency values. For example, the processor 101 is configured to determine, based on that the first information is smaller than the second information, that a coherent optical communication device 100 is a slave device. In addition, another coherent optical communication device is configured to determine, based on that the second information is larger than the first information, that the another coherent optical communication device is a master device.

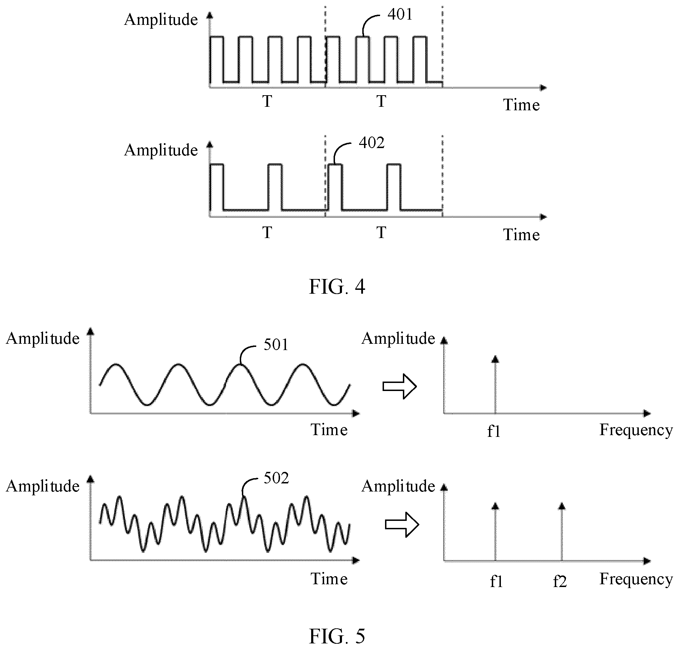

FIG. 4 is a third diagram of structures of a second electrical signal and a first electrical signal according to an embodiment of this application. As shown in FIG. 4, the first electrical signal 401 and the second electrical signal 402 are square wave signals. The first electrical signal 401 and the second electrical signal 402 include different quantities of impulse signals in one periodicity T. That is, a frequency value of the first electrical signal 401 and a frequency value of the second electrical signal 402 are different. First information is a frequency value of the first electrical signal 401. Second information is a frequency value of the second electrical signal 402. The processor 101 and another coherent optical communication device are configured to determine a master-slave relationship based on a magnitude relationship between the two frequency values.

FIG. 5 is a fourth diagram of structures of a second electrical signal and a first electrical signal according to an embodiment of this application. As shown in FIG. 5, the first electrical signal 501 is a single sine wave signal. The second electrical signal 502 is a combination of two sine wave signals. In this case, a quantity of frequency values of the first electrical signal 501 and a quantity of frequency values of the second electrical signal 502 are different. In FIG. 5, the quantity of frequency values of the first electrical signal 501 is 1. The quantity of frequency values of the second electrical signal 502 is 2. First information is the quantity of frequency values of the first electrical signal 501. Second information is the quantity of frequency values of the second electrical signal 502. A processor 101 determines a master-slave relationship based on a magnitude relationship between the two quantities of frequency values. For example, the processor 101 is configured to determine, based on that the first information is smaller than the second information, that a coherent optical communication device 100 is a slave device. In addition, another coherent optical communication device is configured to determine, based on that the second information is larger than the first information, that the another coherent optical communication device is a master device.

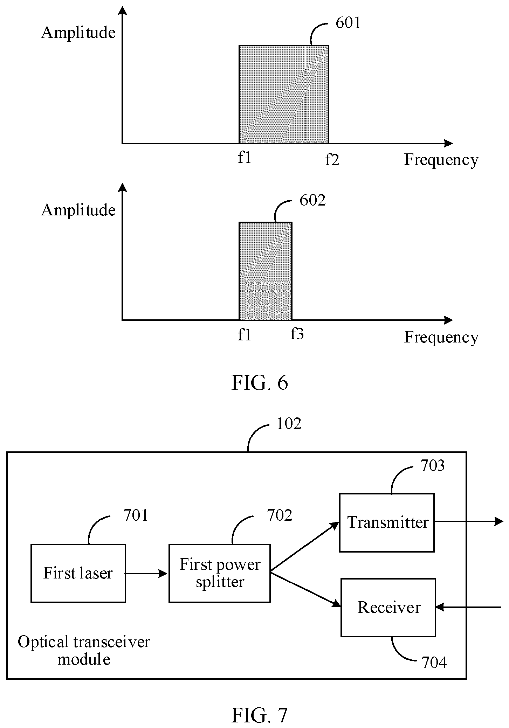

FIG. 6 is a fifth diagram of structures of a second electrical signal and a first electrical signal according to an embodiment of this application. As shown in FIG. 6, a frequency range of the first electrical signal 601 and a frequency range of the second electrical signal 602 are different. The frequency range of the first electrical signal 601 is f1 to f2. f1 is a lower limit frequency of the first electrical signal 601. f2 is an upper limit frequency of the first electrical signal 601. The frequency range of the second electrical signal 602 is f1 to f3. A value of f2 is greater than that of f3. Therefore, a difference between f2 and f1 is greater than a difference between f3 and f1. In other words, a frequency range of the first electrical signal 601 is greater than a frequency range of the second electrical signal 602. First information is the frequency range of the first electrical signal 601. Second information is the frequency range of the second electrical signal 602. A processor 101 determines a master-slave relationship based on a magnitude relationship between the two frequency ranges. For example, the processor 101 is configured to determine, based on that the frequency range of the first electrical signal 601 is greater than the frequency range of the second electrical signal 602, that a coherent optical communication device 100 is a slave device. In addition, another coherent optical communication device is configured to determine, based on that the frequency range of the second electrical signal 602 is smaller than the frequency range of the first electrical signal 601, that the another coherent optical communication device is a master device.

In actual application, when a frequency offset between the two coherent optical communication devices is excessively large, power of the second electrical signal may be low, resulting in low accuracy of the obtained second information. Therefore, the another coherent optical communication device may repeatedly send a second laser signal for a plurality of times. In this case, an optical transceiver module 102 may be configured to receive a plurality of second laser signals from the another coherent optical communication device. The optical transceiver module 102 is configured to convert the plurality of second laser signals into a plurality of second electrical signals. The plurality of second electrical signals are in one-to-one correspondence with the plurality of second laser signals. The optical transceiver module 102 is further configured to superimpose the plurality of second electrical signals to obtain a target electrical signal. The processor 101 is configured to obtain the second information based on the target electrical signal. In this case, the second information may be a duty cycle or frequency information of the target electrical signal.

Similarly, the coherent optical communication device 100 may be configured to repeatedly send a first laser signal for a plurality of times. In this case, the another coherent optical communication device is configured to receive a plurality of first laser signals from the coherent optical communication device 100. The another coherent optical communication device is configured to convert the plurality of first laser signals into a plurality of first electrical signals. The plurality of first electrical signals are in one-to-one correspondence with the plurality of first laser signals. The another coherent optical communication device is further configured to superimpose the plurality of first electrical signals. The another coherent optical communication device is configured to obtain the first information based on a superimposed first electrical signal.

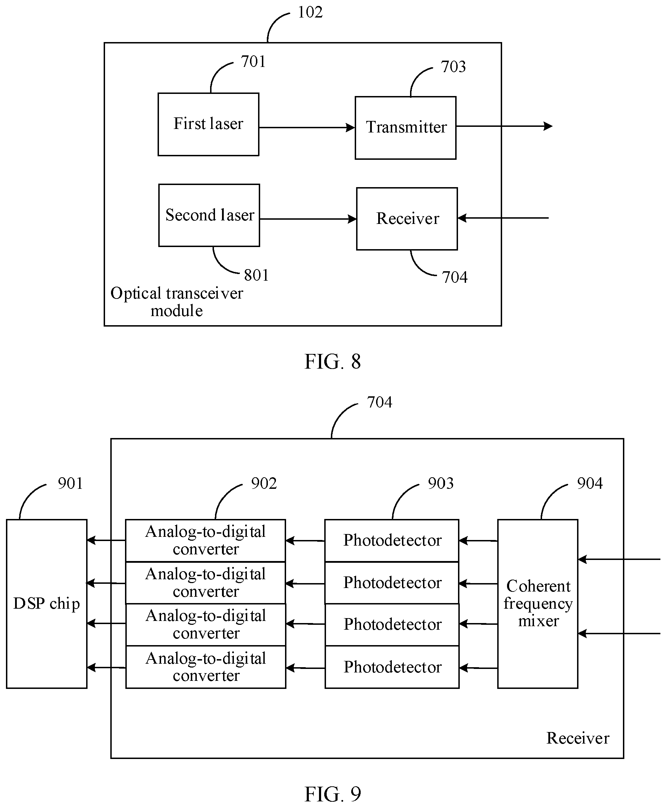

It can be learned from the descriptions of FIG. 1 that, when the frequency offset between the coherent optical communication device 100 and the another coherent optical communication device is less than the third threshold, the coherent optical communication device 100 and the another coherent optical communication device may normally perform transmission of the service laser signal. In this case, the optical transceiver module 102 is configured to demodulate the service laser signal by using a local oscillator laser signal. The optical transceiver module 102 may generate the local oscillator laser signal and the first laser signal by using one laser, or may generate the local oscillator laser signal and the first laser signal by using two lasers respectively. The following provides descriptions separately with reference to FIG. 7 and FIG. 8.

FIG. 7 is a first diagram of a structure of an optical transceiver module according to an embodiment of this application. As shown in FIG. 7, the optical transceiver module 102 includes a first laser 701, a first power splitter 702, a transmitter 703, and a receiver 704. The first laser 701 is configured to generate a target carrier signal. The first power splitter 702 is configured to perform power splitting on the target carrier signal to obtain a first carrier signal and a local oscillator laser signal. The transmitter 703 is configured to: modulate the first carrier signal to obtain a first laser signal, and transmit the first laser signal to another coherent optical communication device. The receiver 704 is configured to: receive a service laser signal from the another coherent optical communication device, and demodulate the received service laser signal based on the local oscillator laser signal.

FIG. 8 is a second diagram of a structure of an optical transceiver module according to an embodiment of this application. As shown in FIG. 8, the optical transceiver module 102 includes a first laser 701, a second laser 801, a transmitter 703, and a receiver 704. The first laser 701 is configured to generate a first carrier signal. The transmitter 703 is configured to: modulate the first carrier signal to obtain a first laser signal, and transmit the first laser signal to another coherent optical communication device. The second laser 801 is configured to generate a local oscillator laser signal. The receiver 704 is configured to: receive a service laser signal from the another coherent optical communication device, and demodulate the received service laser signal based on the local oscillator laser signal.

It can be learned from the descriptions of FIG. 7 and FIG. 8 that the receiver 704 may be configured to demodulate the service laser signal. In actual application, the receiver 704 may also be configured to obtain a second electrical signal based on a second laser signal. FIG. 9 is a first diagram of a structure of a receiver according to an embodiment of this application. As shown in FIG. 9, the processor 101 is a DSP chip 901. The receiver 704 includes four digital-to-analog converters 902, four photodetectors 903, and a coherent frequency mixer 904. The coherent frequency mixer 904 is configured to receive a second laser signal from another coherent optical communication device. The coherent frequency mixer 904 is further configured to: receive a local oscillator laser signal, perform coherent frequency mixing on the local oscillator laser signal and the second laser signal, and output four channels of optical signals. The four photodetectors 903 are configured to: receive the four channels of optical signals, and convert the four channels of optical signals into four channels of analog electrical signals. The four photodetectors 903 are in one-to-one correspondence with the four channels of optical signals. The four channels of optical signals are in one-to-one correspondence with the four channels of analog electrical signals. The four photodetectors 903 are configured to convert the four channels of analog electrical signals into four channels of digital electrical signals. The four channels of analog electrical signals are in one-to-one correspondence with the four channels of digital electrical signals. The DSP chip 901 is configured to obtain a second electrical signal based on the four channels of digital electrical signals. The DSP chip 901 is configured to obtain second information based on the second electrical signal.

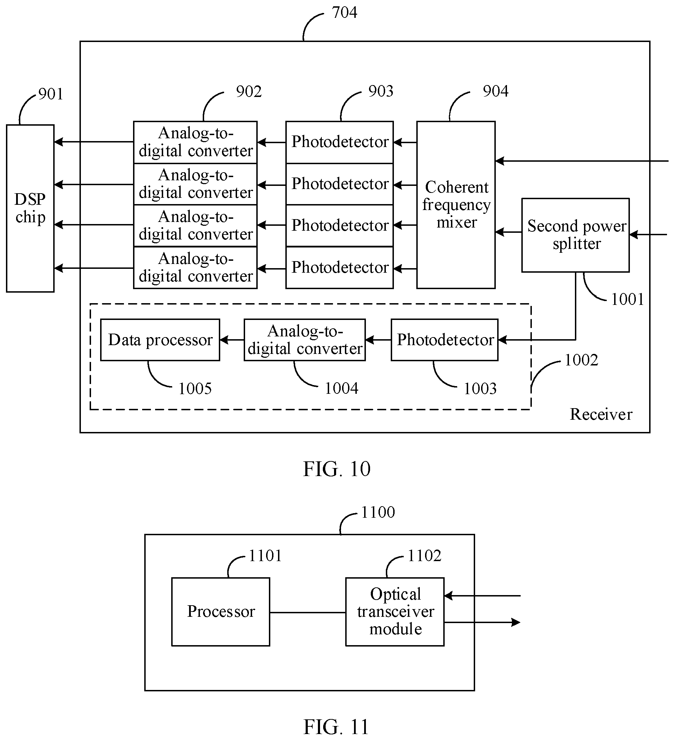

In FIG. 9, due to impact of the local oscillator laser signal, when a frequency offset between two coherent optical communication devices is excessively large, power of the four channels of analog electrical signals may be low. Consequently, the DSP chip 901 may fail to normally obtain the second information. Therefore, the receiver 704 may obtain the second information by using a second power splitter. For example, FIG. 10 is a second diagram of a structure of a receiver according to an embodiment of this application. As shown in FIG. 10, on the basis of FIG. 9, the receiver 704 further includes a second power splitter 1001 and a processing module 1002. The second power splitter 1001 is configured to receive the second laser signal from the another coherent optical communication device. The second power splitter 1001 is configured to split the second laser signal into a first optical sub-signal and a second optical sub-signal through power splitting. The second power splitter 1001 is configured to transmit the first optical sub-signal to the coherent frequency mixer 904. For the descriptions of processing the first optical sub-signal by the receiver 704, refer to the descriptions of processing the second laser signal by the receiver 704 in FIG. 9. The processing module 1002 is configured to obtain the second information based on the second optical sub-signal. In the example of FIG. 10, the processing module 1002 includes a photodetector 1003, an analog-to-digital converter 1004, and a data processor 1005. The photodetector 1003 is configured to convert the second optical sub-signal into an analog electrical signal. The analog-to-digital converter 1004 is configured to convert the analog electrical signal into a digital electrical signal. The data processor 1005 is configured to obtain the second information based on the digital electrical signal. The data processor 1005 may be the DSP chip 901.

It can be learned from the descriptions of FIG. 1 that the coherent optical communication device 100 is configured to determine the master-slave relationship based on the magnitude relationship between the first information and the second information. However, in actual application, when a difference between the first information and the second information is excessively small, an error may occur in determining the master-slave relationship. Therefore, when the difference between the two pieces of information is too small, the coherent optical communication device 100 and the another coherent optical communication device may further generate new information. For example, in FIG. 1, the optical transceiver module 102 is further configured to: generate a third laser signal by using the first laser, and transmit the third laser signal to the another coherent optical communication device. The third laser signal carries third information. The third information is used by the another coherent optical communication device to determine a master-slave relationship based on a magnitude relationship between the third information and fourth information. The optical transceiver module 102 is further configured to receive a fourth laser signal from the another coherent optical communication device. The fourth laser signal is obtained by using the second laser of the another coherent optical communication device. The fourth laser signal carries the fourth information.

For the descriptions of the fourth information and the third information, refer to the foregoing descriptions of the second information and the first information. When a difference between the third information and the fourth information is less than a first threshold, the optical transceiver module 102 is configured to generate the first laser signal by using the first laser. When the difference between the third information and the fourth information is greater than or equal to the first threshold, the processor 101 is configured to determine the master-slave relationship based on the magnitude relationship between the third information and the fourth information. When the difference between the third information and the fourth information is less than the first threshold, the another coherent optical communication device is configured to generate the second laser signal by using the second laser. When the difference between the third information and the fourth information is greater than or equal to the first threshold, the another coherent optical communication device is configured to determine the master-slave relationship based on the magnitude relationship between the third information and the fourth information.

It can be learned from the descriptions of FIG. 1 that the coherent optical communication device 100 is configured to receive the second laser signal from the another coherent optical communication device. However, if the another coherent optical communication device is not powered on, the coherent optical communication device 100 may fail to receive the second laser signal from the another coherent optical communication device. Therefore, the coherent optical communication device 100 may be configured to measure receive power. If the receive power is less than a threshold, the coherent optical communication device 100 continues to measure the receive power. If the receive power is greater than the threshold, it represents that the another coherent optical communication device is powered on. The optical transceiver module 102 is configured to: generate the first laser signal by using the first laser, transmit the first laser signal to the another coherent optical communication device, and receive the second laser signal from the another coherent optical communication device.

FIG. 11 is a second diagram of a structure of a coherent optical communication device according to an embodiment of this application. As shown in FIG. 11, the coherent optical communication device 1100 includes a processor 1101 and an optical transceiver module 1102. The following describes functions of each module.

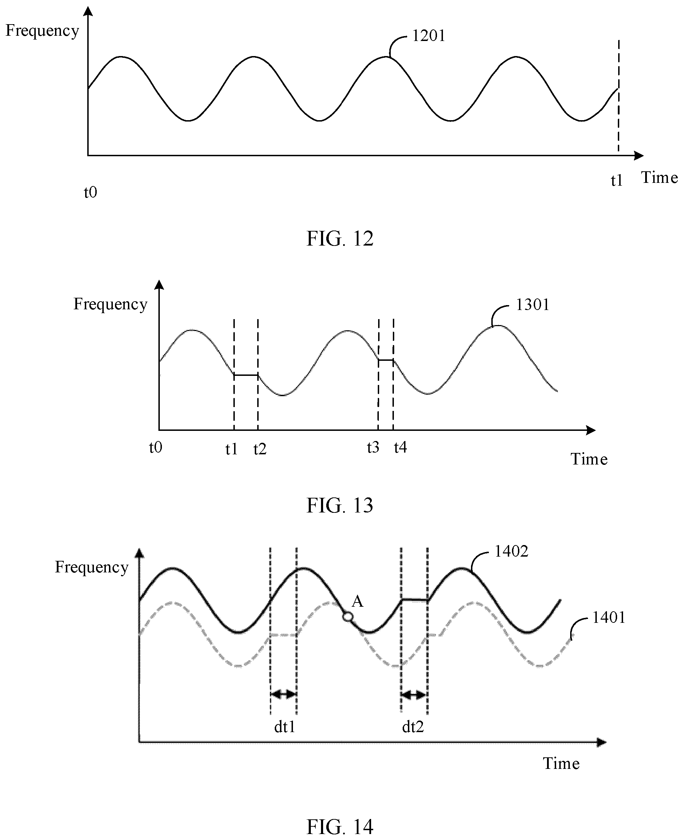

The optical transceiver module 1102 is configured to transmit a first laser signal to another coherent optical communication device in a first time period. A frequency of the first laser signal gradually changes with time in the first time period. The processor 1101 is configured to control, in the first time period, the frequency of the first laser signal to gradually change with time. In this embodiment of this application, a manner in which the processor 1101 controls a frequency of the first laser signal is not limited. For example, the processor 1101 adjusts the frequency of the first laser signal by controlling an injection current of the first laser. In the first time period, the frequency of the first laser signal may periodically change with time. For example, FIG. 12 is a first diagram of a curve of a first laser signal according to an embodiment of this application. As shown in FIG. 12, in a first time period (t0 to t1), a frequency of a first laser signal 1201 periodically changes with time in a sine curve.

The optical transceiver module 1102 is further configured to transmit the first laser signal to the another coherent optical communication device in a second time period. The frequency of the first laser signal does not change with time in the second time period. The processor 1101 is configured to control, in the second time period, the frequency of the first laser signal not to gradually change with time. For example, the processor 1101 is configured to control, in the second time period, an injection current of the first laser signal not to gradually change with time. The first time period and the second time period are alternated. FIG. 13 is a second diagram of a curve of a first laser signal according to an embodiment of this application. As shown in FIG. 13, t0 to t1 is a 1^{st} second time period, t1 to t2 is a 1^{st} first time period, t2 to t3 is a 2^{nd} second time period, and t3 to t4 is a 2^{nd} first time period. In any first time period, a frequency of the first laser signal gradually changes with time. In any second time period, the frequency of the first laser signal does not gradually change with time.

It should be understood that, in this embodiment of this application, impact of some random factors on the frequency of the laser is ignored. For example, in actual application, with a change of an ambient temperature of the first laser, the frequency of the first laser signal may slightly change with time in the second time period.

The optical transceiver module 1102 is further configured to receive a second laser signal from the another coherent optical communication device. For the descriptions of the second laser signal, refer to the descriptions of the first laser signal. For example, another coherent optical communication device is configured to transmit the second laser signal to a coherent optical communication device 1100 in a third time period. A frequency of the second laser signal gradually changes with time in the third time period. Another coherent optical communication device transmits the second laser signal to the coherent optical communication device 1100 in a fourth time period. The frequency of the second laser signal does not change with time in the fourth time period. The third time period and the fourth time period are alternated. FIG. 14 is a diagram of curves of a first laser signal and a second laser signal according to an embodiment of this application. As shown in FIG. 14, a curve 1401 is of the first laser signal. A frequency of the first laser signal does not change with time in a second time period dt1. The frequency of the first laser signal changes with time in a first time period (a time period other than dt1). A curve 1402 is of the second laser signal. A frequency of the second laser signal does not change with time in a fourth time period dt2. The frequency of the second laser signal changes with time in a third time period (a time period other than dt2).

For the descriptions of the processor 1101, refer to the descriptions of the processor 101. For example, the processor 1101 may be a DSP chip. The processor 1101 is configured to continuously obtain a first frequency offset between the first laser signal and the second laser signal. When the first frequency offset is less than a third threshold, the optical transceiver module 1102 is further configured to transmit a service laser signal to the another coherent optical communication device. When the first frequency offset is greater than or equal to the third threshold, the processor 1101 is configured to continue to obtain the first frequency offset until the first frequency offset is less than the third threshold. The service laser signal may be used for carrying service information. Similarly, the another coherent optical communication device may also be configured to continuously obtain the first frequency offset between the first laser signal and the second laser signal. When the first frequency offset is less than the third threshold, the another coherent optical communication device may be further configured to transmit a service laser signal to the coherent optical communication device 1100. When the first frequency offset is greater than or equal to the third threshold, the another coherent optical communication device is configured to continue to obtain the first frequency offset until the first frequency offset is less than the third threshold.

In this embodiment of this application, frequencies of the two coherent optical communication devices constantly change with time. Therefore, the first frequency offset between the two coherent optical communication devices is less than the third threshold at a moment. In FIG. 14, the frequency of the first laser signal is equal to the frequency of the second laser signal at a point A. Therefore, when the point A is approached, the first frequency offset is less than the third threshold, and the two coherent optical communication devices may perform normal service communication. Therefore, in this embodiment of this application, the second time period is introduced, so that a probability that the frequencies of the two coherent optical communication devices are equal can be increased. In this way, efficiency of controlling the frequency offset is improved. In addition, a wavelength locker does not need to be introduced for the coherent optical communication device, thereby reducing costs of the coherent optical communication device.

It should be understood that, in this embodiment of this application, the coherent optical communication device 1100 may not sense frequency adjustment performed by the another coherent optical communication device on the second laser signal, that is, not sense the third time period and the fourth time period. Therefore, there may be no strict limitation relationship between the first time period and both the third time period and the fourth time period. For example, the first time period may be equal to the third time period. For another example, the first time period includes a part of the third time period and a part of the fourth time period. For another example, the first time period is a part of the third time period. Similarly, there is no strict limitation relationship between the second time period and both the third time period and the fourth time period.

In FIG. 13, after the second time period is deleted, the frequency of the first laser signal periodically changes in the first time period. The periodic change of the frequency of the first laser signal is referred to as passive frequency adjustment. To improve the efficiency of controlling the frequency offset, when the first frequency offset is greater than or equal to the third threshold and is less than a fourth threshold, the processor 1101 may be further configured to actively adjust the frequency of the first laser based on the first frequency offset. A curve of active frequency adjustment and a curve of the passive frequency adjustment are different. In actual application, when the first frequency offset is greater than or equal to the fourth threshold, the coherent optical communication device 1100 may fail to obtain the first frequency offset. For example, the fourth threshold is 12.5 gigahertz (gigahertz, GHz). Therefore, the coherent optical communication device 1100 can only perform passive frequency adjustment. When the first frequency offset is less than the fourth threshold, the coherent optical communication device 100 may obtain the first frequency offset. In comparison with the passive frequency adjustment, the active frequency adjustment can improve the efficiency of controlling the frequency offset. For example, based on a direction of the passive frequency adjustment, the coherent optical communication device 1100 needs to increase the frequency of the first laser signal. However, it can be learned from the first frequency offset that the frequency of the first laser signal is greater than the frequency of the second laser signal. The coherent optical communication device 1100 actively adjusts the frequency based on the first frequency offset, to reduce the frequency of the first laser signal. Therefore, the efficiency of controlling the frequency offset can be improved in this embodiment of this application.

In the example in FIG. 13, the two first time periods are shown in a first laser signal 1301. In actual application, the first laser signal 1301 may correspond to more or fewer first time periods. When durations of a plurality of consecutive first time periods are the same, the first frequency offset may be greater than or equal to the third threshold for long time. Therefore, to improve the frequency offset efficiency, the durations of the plurality of consecutive first time periods may be set to random numbers. For example, the durations of the plurality of first time periods comply with a Gaussian distribution.

In the example in FIG. 14, one second time period is shown in the first laser signal 1401. In actual application, the first laser signal 1401 may correspond to more second time periods. When durations of a plurality of consecutive second time periods are the same, the first frequency offset may be greater than or equal to the third threshold for long time. Therefore, to improve the frequency offset efficiency, the durations of the plurality of consecutive second time periods may be set to random numbers.

In actual application, the duration of the first time period or the duration of the second time period affects efficiency of frequency intersection of the two laser signals, that is, affects the efficiency of controlling the frequency offset. Therefore, the duration of the first time period and the duration of the second time period are properly controlled, so that the efficiency of controlling the frequency offset can be improved. For example, the duration of the first time period is less than 10 milliseconds. The duration of the second time period is greater than 1 second.

In the example in FIG. 11, the coherent optical communication device 1100 controls the frequency offset between the two coherent optical communication devices through alternate distribution of the first time period and the second time period. In the example in FIG. 1, the coherent optical communication device 100 controls the frequency offset between the two coherent optical communication devices by using the master-slave relationship. The master-slave relationship depends on transfer of the second information. The transfer of the second information is affected by the frequency offset between the two coherent optical communication devices. Therefore, to improve reliability of transmission of the second information, before the master-slave relationship is determined, the coherent optical communication device 100 may be configured to control the frequency offset between the two coherent optical communication devices based on the alternate distribution of the first time period and the second time period. Descriptions are provided below by using an example.

In FIG. 1, the optical transceiver module 102 is further configured to transmit the third laser signal to the another coherent optical communication device in a first time period by using the first laser. A frequency of the third laser signal gradually changes with time in the first time period. The optical transceiver module 102 is further configured to transmit the third laser signal to the another coherent optical communication device in a second time period by using the first laser. The frequency of the third laser signal does not change with time in the second time period. The first time period and the second time period are alternated. The optical transceiver module 102 is further configured to receive the fourth laser signal from the another coherent optical communication device. The processor 101 is further configured to continuously obtain a first frequency offset between the third laser signal and the fourth laser signal. When the first frequency offset is greater than or equal to a second threshold, the processor 101 is further configured to continue to obtain the first frequency offset between the third laser signal and the fourth laser signal until the first frequency offset is less than the second threshold. When the first frequency offset is less than the second threshold, the optical transceiver module 102 is configured to: generate the first laser signal by using the first laser, and transmit the first laser signal to the another coherent optical communication device. When the first frequency offset is less than the second threshold, the frequency of the third laser signal is a target frequency. The frequency of the first laser signal is also the target frequency. Therefore, the frequency of the first laser signal is the same as the frequency of the third laser signal. The third laser signal may not carry the first information.

Similarly, for descriptions of the fourth laser signal, refer to the descriptions of the third laser signal. For example, the another coherent optical communication device is configured to transmit the fourth laser signal to the coherent optical communication device 100 in a third time period. A frequency of the fourth laser signal gradually changes with time in the third time period. The another coherent optical communication device is configured to transmit the fourth laser signal to the coherent optical communication device 100 in a fourth time period. The frequency of the fourth laser signal does not change with time in the fourth time period. The third time period and the fourth time period are alternated. The frequency of the second laser signal is the same as the frequency of the fourth laser signal. The fourth laser signal may not carry the second information.

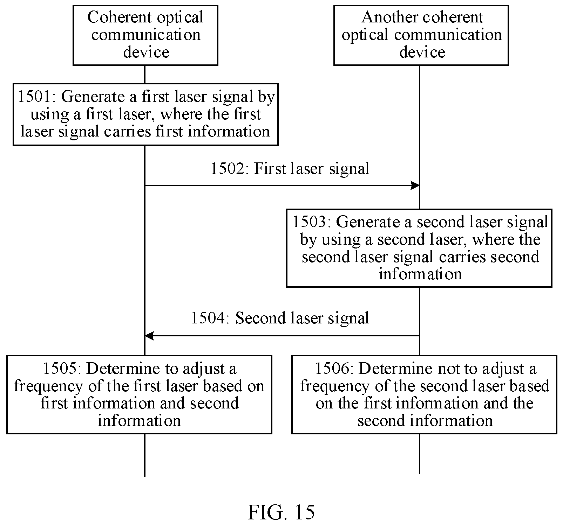

The coherent optical communication device provided in this application is described above, and a coherent optical communication method provided in this application is described below. FIG. 15 is a first schematic flowchart of a coherent optical communication method according to an embodiment of this application. As shown in FIG. 15, the coherent optical communication method includes the following steps.

In step 1501, a coherent optical communication device generates a first laser signal by using a first laser. The first laser signal carries first information.

The coherent optical communication device is configured to: generate the first laser signal by using the first laser, and transmit the first laser signal to another coherent optical communication device. For example, the coherent optical communication device includes the first laser and a transmitter. The first laser is configured to generate a carrier signal. The transmitter is configured to modulate the carrier signal based on a first electrical signal, to obtain the first laser signal. The first laser signal carries the first information. The first information may be generated by the coherent optical communication device by using a random algorithm.

In step 1502, the coherent optical communication device transmits the first laser signal to the another coherent optical communication device.

In step 1503, the another coherent optical communication device generates a second laser signal by using a second laser. The second laser signal carries second information.

The another coherent optical communication device is configured to: generate the second laser signal by using the second laser, and transmit the second laser signal to the coherent optical communication device. For example, the another coherent optical communication device includes the second laser and a transmitter. The second laser is configured to generate a carrier signal. The transmitter is configured to modulate the carrier signal based on a second electrical signal, to obtain the second laser signal. The second laser signal carries the second information. The second information may be generated by the another coherent optical communication device by using the random algorithm.

In step 1504, the another coherent optical communication device transmits the second laser signal to the coherent optical communication device.

In step 1505, the coherent optical communication device determines, based on the first information and the second information, to adjust a frequency of the first laser.

The coherent optical communication device converts the second laser signal into the second electrical signal, and obtains the second information by using the second electrical signal. The coherent optical communication device determines a master-slave relationship based on a magnitude relationship between the first information and the second information. The coherent optical communication device determines, based on the master-slave relationship, whether to adjust a frequency of the laser. A master device in the master-slave relationship does not adjust the frequency of the laser. A slave device in the master-slave relationship adjusts the frequency of the laser. In this embodiment of this application, the coherent optical communication device is the slave device. Therefore, the coherent optical communication device determines, based on the master-slave relationship, to adjust the frequency of the first laser.

In step 1506, the another coherent optical communication device determines, based on the first information and the second information, not to adjust a frequency of the second laser.

The another coherent optical communication device converts the first laser signal into the first electrical signal, and obtains the first information by using the first electrical signal. The another coherent optical communication device determines the master-slave relationship based on the magnitude relationship between the first information and the second information. The another coherent optical communication device determines, based on the master-slave relationship, whether to adjust the frequency of the laser. The master device in the master-slave relationship does not adjust the frequency of the laser. The slave device in the master-slave relationship adjusts the frequency of the laser. In this embodiment of this application, the another coherent optical communication device is the master device. Therefore, the another coherent optical communication device determines, based on the master-slave relationship, not to adjust the frequency of the second laser.

It should be understood that there is no strictly limited time sequence relationship between step 1501 and step 1503. Step 1503 may be performed before step 1501, or may be performed after step 1501. Similarly, there is also no strictly limited time sequence relationship between step 1502 and step 1504. There is also no strictly limited time sequence relationship between step 1505 and step 1506.

It should be understood that descriptions of the coherent optical communication method are similar to the descriptions of the coherent optical communication device. Therefore, for the descriptions of the coherent optical communication method, refer to the foregoing descriptions of the coherent optical communication device. For example, the second information is a duty cycle or frequency information of the second electrical signal. For another example, the coherent optical communication device receives a plurality of second laser signals from the another coherent optical communication device, and converts the plurality of second laser signals into a plurality of second electrical signals. The coherent optical communication device superimposes the plurality of second electrical signals to obtain a target electrical signal. The coherent optical communication device obtains the second information based on the target electrical signal.

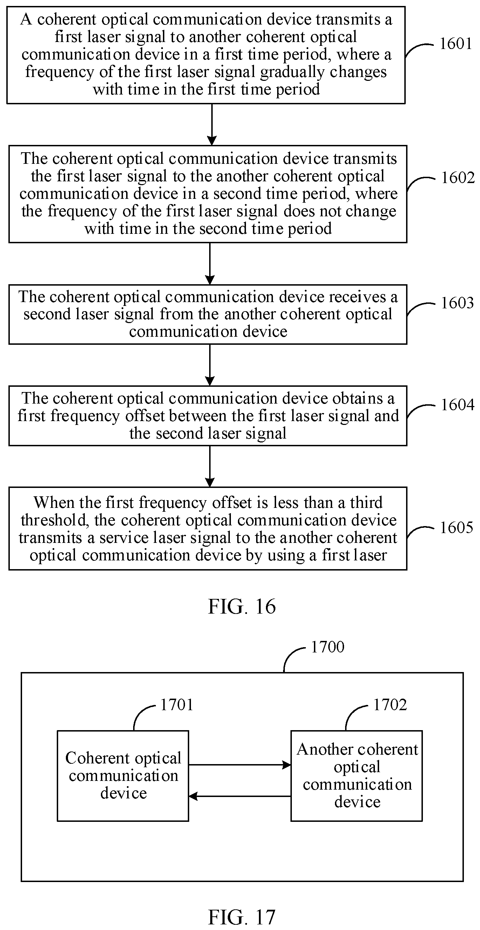

FIG. 16 is a second schematic flowchart of a coherent optical communication method according to an embodiment of this application. As shown in FIG. 16, the coherent optical communication method includes the following steps.

In step 1601, a coherent optical communication device transmits a first laser signal to another coherent optical communication device in a first time period. A frequency of the first laser signal gradually changes with time in the first time period.

The coherent optical communication device controls the frequency of the first laser signal in the first time period, so that the frequency of the first laser signal gradually changes with time. In this embodiment of this application, a manner in which the coherent optical communication device controls a frequency of a first laser is not limited. For example, the coherent optical communication device adjusts the frequency of the first laser signal by controlling an injection current of the first laser. A curve of adjusting the frequency of the first laser by the coherent optical communication device is also not limited in this embodiment of this application. For example, the frequency of the first laser signal periodically changes in a sine curve or a square wave curve.

In step 1602, the coherent optical communication device transmits the first laser signal to the another coherent optical communication device in a second time period. The frequency of the first laser signal does not change with time in the second time period.

In step 1603, the coherent optical communication device receives a second laser signal from the another coherent optical communication device.

For descriptions of the second laser signal, refer to the descriptions of the first laser signal. For example, the another coherent optical communication device is configured to transmit the second laser signal to the coherent optical communication device in a third time period. A frequency of the second laser signal gradually changes with time in the third time period. The another coherent optical communication device transmits the second laser signal to the coherent optical communication device in a fourth time period. The frequency of the second laser signal does not change with time in the fourth time period. The third time period and the fourth time period are alternated.

In step 1604, the coherent optical communication device obtains a first frequency offset between the first laser signal and the second laser signal.

In step 1605, when the first frequency offset is less than a third threshold, the coherent optical communication device transmits a service laser signal to the another coherent optical communication device by using the first laser.

The coherent optical communication device continuously obtains the first frequency offset between the first laser signal and the second laser signal. When the first frequency offset is less than the third threshold, the coherent optical communication device transmits the service laser signal to the another coherent optical communication device. The service laser signal may be used for carrying service information. When the first frequency offset is greater than or equal to the third threshold, the coherent optical communication device continues to obtain the first frequency offset until the first frequency offset is less than the third threshold.

It should be understood that descriptions of the coherent optical communication method are similar to the descriptions of the coherent optical communication device. Therefore, for the descriptions of the coherent optical communication method, refer to the foregoing descriptions of the coherent optical communication device. For example, when the first frequency offset is greater than or equal to the third threshold and is less than a fourth threshold, the coherent optical communication device actively adjusts the frequency of the first laser based on the first frequency offset. For another example, durations of a plurality of consecutive first time periods are random numbers.

FIG. 17 is a diagram of a structure of a coherent optical communication system according to an embodiment of this application. As shown in FIG. 17, the coherent optical communication system 1700 includes a coherent optical communication device 1701 and another coherent optical communication device 1702. The coherent optical communication device 1701 may be the coherent optical communication device 100 in FIG. 1 or the coherent optical communication device 1100 in FIG. 11.

When the coherent optical communication device 1701 may be the coherent optical communication device 100 in FIG. 1, the coherent optical communication device 1701 is configured to: generate a first laser signal by using a first laser, and transmit the first laser signal to the another coherent optical communication device 1702. The another coherent optical communication device 1702 is configured to: generate a second laser signal by using a second laser, and transmit the second laser signal to the coherent optical communication device 1701. The coherent optical communication device 1701 is configured to receive the second laser signal from the another coherent optical communication device 1702. The coherent optical communication device 1701 is configured to: convert the second laser signal into a second electrical signal, and obtain second information based on the second electrical signal. The coherent optical communication device 1701 is configured to determine to adjust a frequency of the first laser based on a magnitude relationship between first information and the second information. The another coherent optical communication device 1702 is configured to receive the first laser signal from the coherent optical communication device 1701. The another coherent optical communication device 1702 is configured to: convert the first laser signal into a first electrical signal, and obtain the first information based on the first electrical signal. The another coherent optical communication device 1702 is configured to determine not to adjust a frequency of the second laser based on the magnitude relationship between the first information and the second information.

When the coherent optical communication device 1701 may be the coherent optical communication device 1100 in FIG. 11, the coherent optical communication device 1701 is configured to transmit a first laser signal to the another coherent optical communication device 1702 in a first time period. A frequency of the first laser signal gradually changes with time in the first time period. The coherent optical communication device 1701 is configured to transmit the first laser signal to the another coherent optical communication device 1702 in a second time period. The frequency of the first laser signal does not change with time in the second time period. The first time period and the second time period are alternated. The another coherent optical communication device 1702 is configured to transmit a second laser signal to the coherent optical communication device 1701 in a third time period. A frequency of the second laser signal gradually changes with time in the third time period. Another coherent optical communication device 1702 transmits the second laser signal to the coherent optical communication device 1701 in a fourth time period. The frequency of the second laser signal does not change with time in the fourth time period. The third time period and the fourth time period are alternated. The coherent optical communication device 1701 is further configured to: obtain a first frequency offset between the first laser signal and the second laser signal, and when the first frequency offset is less than a third threshold, transmit a service laser signal to the another coherent optical communication device 1702 by using the first laser.

It should be understood that descriptions of the coherent optical communication system are similar to the descriptions of the coherent optical communication device. Therefore, for the descriptions of the coherent optical communication system, refer to the foregoing descriptions of the coherent optical communication device. For example, the second information is a duty cycle or frequency information of the second electrical signal. For another example, durations of a plurality of consecutive first time periods are random numbers.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A coherent optical communication device, comprising an optical transceiver module and a processor, wherein
the optical transceiver module is configured to: generate a first laser signal by using a first laser, and transmit the first laser signal to another coherent optical communication device, wherein the first laser signal carries first information;
the optical transceiver module is further configured to: receive a second laser signal from the another coherent optical communication device, wherein the second laser signal is obtained by using a second laser; and convert the second laser signal into a second electrical signal; and
the processor is configured to obtain second information based on the second electrical signal, wherein a magnitude relationship between the first information and the second information is used for determining to adjust a frequency of one laser in two lasers and determining not to adjust a frequency of the other laser in the two lasers, and the two lasers comprise the first laser and the second laser.

2. The coherent optical communication device according to claim 1, wherein the second information is a duty cycle or frequency information of the second electrical signal.

3. The coherent optical communication device according to claim 2, wherein the frequency information of the second electrical signal is a frequency value of the second electrical signal, a quantity of frequency values of the second electrical signal, or a frequency range of the second electrical signal.

4. The coherent optical communication device according to any one of claims 1 to 3, wherein
that the optical transceiver module is further configured to: receive the second laser signal from the another coherent optical communication device, and convert the second laser signal into the second electrical signal comprises: the optical transceiver module is configured to: receive a plurality of second laser signals from the another coherent optical communication device, and convert the plurality of second laser signals into a plurality of second electrical signals;
the optical transceiver module is further configured to superimpose the plurality of second electrical signals to obtain a target electrical signal; and
that the processor is configured to obtain the second information based on the second electrical signal comprises: the processor is configured to obtain the second information based on the target electrical signal.

5. The coherent optical communication device according to any one of claims 1 to 4, wherein
the optical transceiver module is further configured to: split the second laser signal into a first optical sub-signal and a second optical sub-signal through power splitting, and perform coherent frequency mixing on the first optical sub-signal and a local oscillator laser signal; and
that the optical transceiver module is further configured to convert the second laser signal into the second electrical signal comprises: the optical transceiver module is configured to convert the second optical sub-signal into the second electrical signal.

6. The coherent optical communication device according to claim 5, wherein
that the optical transceiver module is configured to generate the first laser signal by using the first laser comprises: the optical transceiver module is configured to: generate a target carrier signal by using the first laser, and perform power splitting on the target carrier signal to obtain a first carrier signal and the local oscillator laser signal, wherein the first carrier signal is used for obtaining the first laser signal.

7. The coherent optical communication device according to any one of claims 1 to 6, wherein
the optical transceiver module is further configured to: generate a third laser signal by using the first laser; transmit the third laser signal to the another coherent optical communication device, wherein the third laser signal carries third information; and receive a fourth laser signal from the another coherent optical communication device, wherein the fourth laser signal carries fourth information; and
that the optical transceiver module is configured to generate the first laser signal by using the first laser comprises: when a difference between the third information and the fourth information is less than a first threshold, the optical transceiver module is configured to generate the first laser signal by using the first laser.

8. The coherent optical communication device according to any one of claims 1 to 6, wherein
the optical transceiver module is further configured to: transmit a third laser signal to the another coherent optical communication device in a first time period, wherein a frequency of the third laser signal changes with time in the first time period; transmit the third laser signal to the another coherent optical communication device in a second time period, wherein the frequency of the third laser signal does not change with time in the second time period, and the first time period and the second time period are alternated; and receive a fourth laser signal from the another coherent optical communication device;
the processor is further configured to obtain a first frequency offset between the third laser signal and the fourth laser signal; and
that the optical transceiver module is configured to generate the first laser signal by using the first laser comprises: when the first frequency offset is less than a second threshold, the optical transceiver module is configured to generate the first laser signal by using the first laser, wherein a frequency of the first laser signal is the same as the frequency of the third laser signal.

9. A coherent optical communication method, comprising:
generating, by a coherent optical communication device, a first laser signal by using a first laser;
transmitting, by the coherent optical communication device, the first laser signal to another coherent optical communication device, wherein the first laser signal carries first information;
generating, by the another coherent optical communication device, a second laser signal by using a second laser;
transmitting, by the another coherent optical communication device, the second laser signal to the coherent optical communication device, wherein the second laser signal carries second information;
receiving, by the coherent optical communication device, the second laser signal from the another coherent optical communication device, converting the second laser signal into a second electrical signal, obtaining the second information based on the second electrical signal, and determining to adjust a frequency of the first laser based on a magnitude relationship between the first information and the second information; and
receiving, by the another coherent optical communication device, the first laser signal from the coherent optical communication device, converting the first laser signal into a first electrical signal, obtaining the first information based on the first electrical signal, and determining not to adjust a frequency of the second laser based on the magnitude relationship between the first information and the second information.

10. The coherent optical communication method according to claim 9, wherein
receiving, by the coherent optical communication device, the second laser signal from the another coherent optical communication device comprises: receiving, by the coherent optical communication device, a plurality of second laser signals from the another coherent optical communication device;
converting, by the coherent optical communication device, the second laser signal into the second electrical signal comprises: converting, by the coherent optical communication device, the plurality of second laser signals into the plurality of second electrical signals;
the method further comprises:
superimposing, by the coherent optical communication device, the plurality of second electrical signals to obtain a target electrical signal; and
obtaining, by the coherent optical communication device, the second information based on the second electrical signal comprises: obtaining, by the coherent optical communication device, the second information based on the target electrical signal.

11. The coherent optical communication method according to claim 9 or 10, wherein the method further comprises:
splitting, by the coherent optical communication device, the second laser signal into a first optical sub-signal and a second optical sub-signal through power splitting; and
performing, by the coherent optical communication device, coherent frequency mixing on the first optical sub-signal and a local oscillator laser signal; and
converting, by the coherent optical communication device, the second laser signal into the second electrical signal comprises: converting, by the coherent optical communication device, the second optical sub-signal into the second electrical signal.

12. The coherent optical communication method according to claim 11, wherein
generating, by the coherent optical communication device, the first laser signal by using the first laser comprises: generating, by the coherent optical communication device, a target carrier signal by using the first laser, and performing power splitting on the target carrier signal to obtain a first carrier signal and the local oscillator laser signal, wherein the first carrier signal is used for obtaining the first laser signal.

13. The coherent optical communication method according to any one of claims 9 to 12, wherein the method further comprises:
generating, by the coherent optical communication device, a third laser signal by using the first laser; transmitting the third laser signal to the another coherent optical communication device, wherein the third laser signal carries third information; and receiving a fourth laser signal from the another coherent optical communication device, wherein the fourth laser signal carries fourth information; and
generating, by the coherent optical communication device, the first laser signal by using the first laser comprises: when a difference between the third information and the fourth information is less than a first threshold, generating, by the coherent optical communication device, the first laser signal by using the first laser.

14. The coherent optical communication method according to any one of claims 9 to 12, wherein the method further comprises:
transmitting, by the coherent optical communication device, a third laser signal to the another coherent optical communication device in a first time period, wherein a frequency of the third laser signal gradually changes with time in the first time period; transmitting the third laser signal to the another coherent optical communication device in a second time period, wherein the frequency of the third laser signal does not change with time in the second time period, and the first time period and the second time period are alternated; and receiving a fourth laser signal from the another coherent optical communication device; and
obtaining, by the coherent optical communication device, a first frequency offset between the third laser signal and the fourth laser signal; and
generating, by the coherent optical communication device, the first laser signal by using the first laser comprises: when the first frequency offset is less than a second threshold, generating, by the coherent optical communication device, the first laser signal by using the first laser, wherein a frequency of the first laser signal is the same as the frequency of the third laser signal.

15. A coherent optical communication system, comprising a coherent optical communication device and another coherent optical communication device, wherein
the coherent optical communication device is configured to: generate a first laser signal by using a first laser, and transmit the first laser signal to the another coherent optical communication device;
the another coherent optical communication device is configured to: generate a second laser signal by using a second laser, and transmit the second laser signal to the coherent optical communication device;
the coherent optical communication device is configured to: receive the second laser signal from the another coherent optical communication device, convert the second laser signal into a second electrical signal, obtain second information based on the second electrical signal, and determine to adjust a frequency of the first laser based on a magnitude relationship between first information and the second information; and
the another coherent optical communication device is configured to: receive the first laser signal from the coherent optical communication device, convert the first laser signal into a first electrical signal, obtain the first information based on the first electrical signal, and determine not to adjust a frequency of the second laser based on the magnitude relationship between the first information and the second information.

16. The coherent optical communication system according to claim 15, wherein
that the coherent optical communication device is further configured to: receive the second laser signal from the another coherent optical communication device, and convert the second laser signal into the second electrical signal comprises: the coherent optical communication device is configured to: receive a plurality of second laser signals from the another coherent optical communication device, and convert the plurality of second laser signals into a plurality of second electrical signals;
the coherent optical communication device is further configured to superimpose the plurality of second electrical signals to obtain a target electrical signal; and
that the coherent optical communication device is further configured to obtain the second information based on the second electrical signal comprises: the coherent optical communication device is configured to obtain the second information based on the target electrical signal.

17. The coherent optical communication system according to claim 15 or 16, wherein
the coherent optical communication device is further configured to: split the second laser signal into a first optical sub-signal and a second optical sub-signal through power splitting, and perform coherent frequency mixing on the first optical sub-signal and a local oscillator laser signal; and
that the coherent optical communication device is further configured to convert the second laser signal into the second electrical signal comprises: the coherent optical communication device is configured to convert the second optical sub-signal into the second electrical signal.

18. The coherent optical communication system according to claim 17, wherein
that the coherent optical communication device is configured to generate the first laser signal by using the first laser comprises: the coherent optical communication device is configured to: generate a target carrier signal by using the first laser, and perform power splitting on the target carrier signal to obtain a first carrier signal and the local oscillator laser signal, wherein the first carrier signal is used for obtaining the first laser signal.

19. The coherent optical communication system according to any one of claims 15 to 18, wherein
the coherent optical communication device is further configured to: generate a third laser signal by using the first laser; transmit the third laser signal to the another coherent optical communication device, wherein the third laser signal carries third information; and receive a fourth laser signal from the another coherent optical communication device, wherein the fourth laser signal carries fourth information; and
that the coherent optical communication device is configured to generate the first laser signal by using the first laser comprises: when a difference between the third information and the fourth information is less than a first threshold, the coherent optical communication device is configured to generate the first laser signal by using the first laser.

20. The coherent optical communication system according to any one of claims 15 to 18, wherein
the coherent optical communication device is further configured to: transmit a third laser signal to the another coherent optical communication device in a first time period, wherein a frequency of the third laser signal gradually changes with time in the first time period; transmit the third laser signal to the another coherent optical communication device in a second time period, wherein the frequency of the third laser signal does not change with time in the second time period, and the first time period and the second time period are alternated; and receive a fourth laser signal from the another coherent optical communication device;
the coherent optical communication device is further configured to obtain a first frequency offset between the third laser signal and the fourth laser signal; and
that the coherent optical communication device is configured to generate the first laser signal by using the first laser comprises: when the first frequency offset is less than a second threshold, the coherent optical communication device is configured to generate the first laser signal by using the first laser, wherein a frequency of the first laser signal is the same as the frequency of the third laser signal.
